(19) Europäisches Patentamt
European Patent Office
Office européen des brevets

(11) **EP 4 636 996 A1**

(12) **EUROPEAN PATENT APPLICATION**

(43) Date of publication:
22.10.2025 Bulletin 2025/43

(21) Application number: 24171226.4

(22) Date of filing: 19.04.2024

(51) International Patent Classification (IPC):
*H02K 3/493* (2006.01)     *H02K 7/18* (2006.01)

(52) Cooperative Patent Classification (CPC):
**H02K 3/493;** H02K 7/1838; H02K 2213/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Gamesa Renewable Energy
A/S**
**7330 Brande (DK)**

(72) Inventors:
• **Azar, Ziad**
**Sheffield, S10 4ED (GB)**
• **Clark, Richard**
**Worrall, S35 0AF (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **COVERING ELEMENT FOR COVERING A SLOT BETWEEN TWO ADJACENT TOOTH TIPS OF AN ELECTRIC MACHINE**

(57)     The present invention describes a covering element (100, 300, 900, 990, 991) for covering a slot (565) between two adjacent teeth (561, 562) of an electric machine, a stator for an electric machine and a method of forming a covering element (100). The covering element (100, 300, 900, 990, 991) comprises a first sub-element (110, 310, 910, 911, 912) and a second sub-element (120, 330, 920, 921, 922). The first sub-element (110, 310, 910, 911, 912) and the second sub-element (120, 330, 920, 921, 922) are arranged adjacent to each other in a first direction (181). Further, the second sub-element (120, 330, 920, 921, 922) is made of a different material, is longer than the first sub-element (110, 310, 910, 911, 912) and has a lower relative magnetic permeability. The location of the first sub-element is defined by the rotation direction during operation of the machine.

FIG 4

EP 4 636 996 A1

## Description

Field of invention

The present invention relates to the field of flux linkage between the rotor and the stator of an electric machine. Particularly, the present invention relates to a covering element for covering a slot between two adjacent tooth tips of an electric machine and a method of forming a covering element.

Art Background

In today's electric machines a radially enlarged tooth tip is provided at each tooth of a stator for reducing a poor flux linkage of a wide slot opening between adjacent teeth of the stator.

EP3457536B1 discloses a covering element for covering a slot between two adjacent tooth tips of an electric machine.

In some current solutions, stator teeth are provided with circumferential enlarged tooth tips for ameliorating a flux linkage between the rotor and the stator. However, an insertion of the stator coil in the slot between adjacent teeth may be difficult because of the shape of the radially enlarged tooth tips.

Hence, a damage of the inserted coil may be the consequence. Particularly, the turn-turn insulation as well as the main wall insulation may be damaged during the insertion. Additionally, these damages of the turn-turn insulation and/or the main wall insulation may not be found during a production acceptance testing. However, these damages may reduce the insulation lifetime and hence the lifetime of the electric machine.

The lifetime of an electric machine is crucial from the economic perspective. Further, the reliability of the electric machine is a key factor for the operational costs.

Summary of the Invention

It may be an objective of the present invention to provide a reliable and simple covering element for an electric machine which is able to enhance a flux linkage in the electric machine.

These objectives may be solved by a covering element for covering a slot between two adjacent tooth tips of an electric machine, a stator and a method according to the independent claims.

A covering element for covering a slot between two adjacent stator tooth tips is also called a slot wedge.

Generally, the first direction may be parallel to the circumferential direction of the electric machine or the stator. The second direction may be parallel to the radial direction of the electric machine or the stator. The third direction may be parallel to the axial direction of the electric machine or the stator.

The electric machine discussed below may be a generator or a motor, e.g. a generator of a wind turbine.

The magnets discussed below may be permanent magnets or electrically excited magnets.

According to a first aspect of the present invention, there is a covering element for covering a stator slot between two adjacent stator teeth of the stator of an electric machine, the covering element comprising a first sub-element and a second sub-element.

The first sub-element and the second sub-element are arranged adjacent to each other in a first direction, i.e. the circumferential direction of the electric machine.

The second sub-element is made of a material with different magnetic properties than the first sub-element.

The first relative magnetic permeability of the first sub-element is higher than the second magnetic permeability of the second sub-element.

The first sub-element has a first length in a first direction (circumferential direction) and the second sub-element has a second length in the first direction, wherein the first length is smaller than the second length.

The first sub-element of the covering element is located at or close to the leading area of the respective stator slot. The second sub-element of the covering element is located at or close to the trailing area of the respective stator slot.

For simplification, the length of the first sub-element in the first direction is defined by the length of the cuboid which envelops the first sub-element.

The length of the second sub-element in the first direction is defined by the length of the cuboid which envelops the second sub-element.

The length of the cover element in the first direction is defined by the length of the cuboid which envelops the second sub-element. Due to this simplification of the definitions of the said lengths, the sum of the lengths of the first and second sub-elements may be slightly higher than the length of the cover element.

Advantageously, with the cover element discussed above, the magnetic flux between magnets of the rotor and the stator with the respective increase of torque and electrical power may be increased by up to 0,7%. Furthermore, a better demagnetization resistance, reduced torque ripple, cogging torque and lower AC losses in the slot conductors can be achieved.

It also reduces the effective airgap by reducing the impact of the slots on the airgap reluctance, helps control cogging torque and protects the windings from proximity effects (increased ac losses) from the passing magnets by reducing leakage flux that enters the side of the tooth.

A simplified magnetic simulation shows that the position of the first sub-element with determined dimensions at the leading area and the second sub-element at the trailing may increase the resulting torque of the electric machine by 0,5% compared to an increase of only 0,25% if the position of the first sub-element with the same determined dimensions is at the trailing area and the position of the second sub-element is at the leading area. The reason for that result is explained in the following:

For simplification, in the following, the cover element is assumed to be non-magnetic:

In standstill of the electric machine, i.e. the magnets at the rotor are not sweeping over the stator, an exemplary non-moving magnet located over a pair of stator teeth and coils does not create any changes of the magnet flux lines which might create currents in the coils or eddy currents in the stator teeth. , a symmetric topology of the magnetic field lines in the respective pair of stator teeth and coils in the stator slot may occur, which means that the size of the magnetic flux in the tooth in the leading area is essentially equal to the size of the magnetic flux in the tooth in the trailing area.

During operation of the electric machine, the rotor with the magnets rotates and the magnets sweep over the pairs of stator teeth and the coils. The exemplary magnet moves over the pair of stator teeth and the coils which creates currents in the coils and the stator teeth. These currents in the coils create magnetic flux superposing with the magnetic flux produced by the magnets. Therefore, the magnetic field lines of an electric machine in operation differ from the magnetic flux lines of an electric machine in standstill/not in rotation.

As a result, magnetic field lines in the respective pair of stator teeth, coils and cover elements are different comparing the region of the leading area with the region of the trailing area. Without the presence of a covering element or a covering element being non-magnetic (relative permeability $\mu\_r=1$), the magnetic field density (or the magnetic flux) is higher at the trailing area compared to the leading area.

This asymmetry is also caused by the interaction of the magnetic fields due to the magnets and the currents in the coils. The two fields are synchronous (i.e. rotate together) but there is an angle between the main axis of each field.

The use of a more magnetic material in the first sub-element at the leading area (area with the smaller magnetic flux) leads to a disproportional increase in the magnetic flux linkage between magnet, cover element and the respective stator tooth thus increasing the machine's torque.

The use of less magnetic material in the second sub-element at the trailing area (area with the higher magnetic flux) leads to a disproportional less mechanical stress in the cover element due to magnetic forces. On the same time, an only small torque reduction will occur due to the less magnetic material of the second sub-element.

Additionally, a magnetic saturation of the cover element is less probable or occurs less often when using a less magnetic material for the second sub-element and a higher magnetic material for the first sub-element.

For better understanding, said increased flux linkage due to a higher relative permeability can also be explained as a lower reluctance in the magnetic path between magnet, respective stator teeth and coil. This provides a lower reluctance path that guides the magnet flux crossing the airgap without travelling into the slot and taking a path which passes through the winding and fully links with all coils and reduces ac loss in the turns proximate to the airgap.

When the magnetic permeability of a cover element is low, there is no flux linkage or only a low flux linkage over the cover element. Hence, the two adjacent tooth tips are decoupled with respect to the magnetic flux. On the other hand, when the magnetic permeability is high, the flux linkage between the two neighbouring stator teeth is high.

The leading area and trailing area of a stator slot along the first direction is defined in the following:

a reference line is located at the rotor in axial direction and
a reference plane is extending from the reference line in radial direction.

During operation of the electric machine the rotor and the reference plane rotate around the axis of the rotor with a rotational speed such that the reference plane sweeps over and intersects with the stator, the stator teeth, the stator slots and the covering elements.

During rotation of the reference plane the region in which the reference plane starts to intersect with the stator slot is defined as the leading area of the stator slot and
the region in which the reference plane ends to intersect with the stator slot is defined as a trailing area of the stator slot.

The middle of the covering element is mechanically its most exposed area. By using a material with a lower relative magnetic permeability in this area reduces the magnetic forces which increases the lifetime of the electric machine. According to another exemplary embodiment, the first sub-element has a relative permeability between 3 and 20, preferably between 5 and 15, preferably between 8 and 12, preferably of about 10 with preferably non-linear soft magnetic properties, wherein

the second sub-element has a relative permeability of less than three with preferably soft magnetic properties, preferably less than 2 or preferably a relative permeability of about 1,
wherein the relation of the first permeability to the second permeability is between 3 and 15, preferably between 6 and 12, preferably between 9 and 11.

Materials being soft magnetic will typically be a pressed iron powder or an iron powder in an epoxy matrix and will have a non-linear magnetisation characteristic.

An increase of the relative permeability leads to higher magnetic linkage/magnetic flux, but also to higher mechanical loads on the cover element reducing lifetime of the electric machine. Higher relative permeability increases the occurrence of magnetic saturation with non-linear magnetic behaviour leading to higher harmonics of the magnetic flux creating unwanted mechanical vibrations. Therefore, the features of this embodiment lead to an improvement of the machine's performance.

According to another exemplary embodiment,

the first sub-element is magnetically saturated during operation of the electric machine,
and/or
the second sub-element is magnetically non-saturated during operation of the electric machine,
preferably the magnetic field in the first sub-element and/or second sub-element (120) being below 1,5 to 1,8 Tesla.

This leads to smaller mechanical vibrations of the machine increasing its lifetime due to preventing non-linear magnetic effects due to a magnetic saturation creating higher harmonics.

According to another exemplary embodiment, the relation between first length and second length is between 1/7 and 1/3, preferably between 1/6 and 1/4, preferably between 1/5 and 1/4.

Advantageously, with a small reduction of an increase of the magnetic linkage/resulting torque, an only small increase of magnetic forces can be reached limiting mechanical stresses.

According to another exemplary embodiment, the cover element has a length in first direction between 15 and 50mm, preferably between 20 and 25mm.

According to another exemplarily embodiment, the cover element comprises essentially only the first sub-element and the second sub-element and no other sub-element in the first direction. This simplifies the production by having only one interface between the first sub-element and the second sub-element which increases long term stability.

According to another exemplary embodiment, the first sub-element and the second sub-element are formed as an integral part of the covering element by pressing and heat treatment of a powder with different magnetic properties or with a powder with the same magnetic properties but with a different density distribution. This could be manufactured from a single piece of composted (glass fiber and epoxy resin) in which only a proportion is loaded with magnetic iron powder. The integral part of the covering element may also comprise in the first sub-element more magnetic powder density than in the second sub-element.

Alternatively, the second sub-element is made of a different material than the first sub-element preferably being fixed to each other via gluing or welding or casting or moulding or chemical linkage.

Thus, a reliable mechanical stiff cover element can be achieved.

According to another exemplary embodiment, the stator comprises stator lamination sheets stacked on each other in the third direction (axial direction).

According to another exemplary embodiment, the first sub-element and the second sub-element are configured for being each coupled to a tip region of a respective stator tooth, preferably via press fitting and/or epoxy resin.

Thus, a mechanical stable fixation of the cover element can be achieved. Therefore, the cover element well performs its function as a mechanical slot wedge to protect and constrain the windings within their slots.

According to another exemplary embodiment, there is a stator for an electric machine, preferably a generator of a wind turbine, the stator comprising

at least a pair of two stator teeth, and
at least one covering element as disclosed above,
wherein each of the pair of two stator teeth comprises a tip region with a groove,
wherein the at least one covering element is arranged in-between the at least two teeth,
wherein the first sub-element comprises a first coupling section,
wherein the second sub-element comprises a second coupling section,
wherein the first coupling section and the second coupling section are each coupled in the respective groove of the two teeth.

According to another exemplary embodiment, the respective grooves of the stator teeth have a shape being complementary to a shape of a first coupling section or a second coupling section.

According to another exemplary embodiment, there is a method of forming a covering element disclosed above. The covering element has a first sub-element and a second sub-element which are arranged adjacent to each other in the first direction (circumferential direction). The first sub-element and the second sub-element are fixed to each other via gluing or welding or casting or moulding,
wherein the second sub-element is made of a different material than the first sub-element. Preferably, the second sub-element is made of a fibre composite.

According to another exemplary embodiment, a method of forming the covering element as shown above is provided.

The first sub-element and the second sub-element of the cover element are arranged adjacent to each other in the first direction (circumferential direction).

The first sub-element and the second sub-element are made as one integral part.

Preferably, the first sub-element and the second sub-element are made by pressing and heat treatment of a powder with different magnetic properties. Preferably the first sub-element element and the second sub-element are made of a fibre composite, e.g. glass fibre and epoxy resin, wherein the first element is loaded with magnetic powder and the second sub-element comprises with less or without magnetic powder.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1 shows a side view of a wind turbine

Fig. 2 shows a covering element according to an exemplary embodiment of the invention.

Fig. 3 shows a stator with a covering element according to an exemplary embodiment of the invention.

Fig. 4 shows a cross section of a section of an electric machine according to an exemplary embodiment of the invention.

Fig. 5 shows an enlarged section of a part of the electric machine of Fig. 4.

Fig. 6 shows a cross section of a covering element according to an exemplary embodiment of the invention

Detailed Description

The illustrations in the drawings are schematically. It is noted that in different figures, similar or identical elements are provided with the same reference signs.

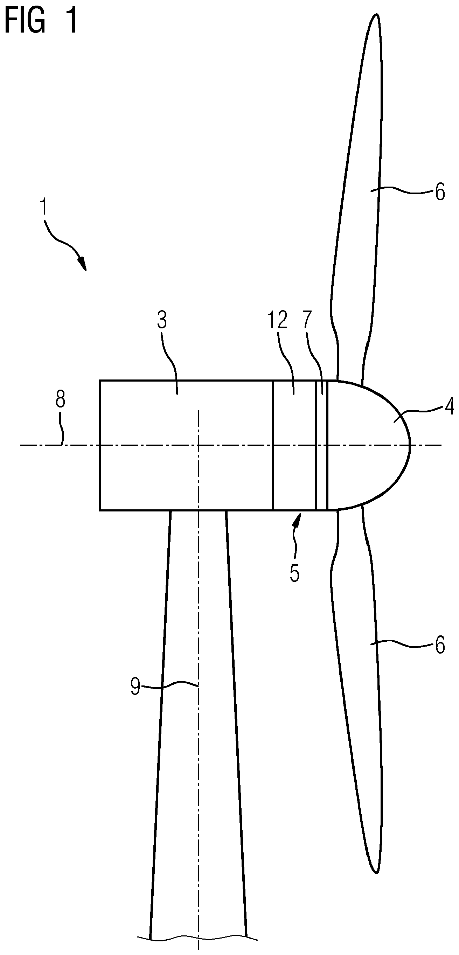

**Fig. 1** shows a side view of a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor hub 4 with three rotor blades 6 (of which two rotor blades 6 are depicted in Fig. 1). Each blade 6 is configured to be pitched by a pitch angle about a pitch axis of the blade 6. The rotor hub 4 is mounted rotatable about a rotational axis 8 (rotor axis) with regard to the nacelle 3 by means of a main bearing 7.

The wind turbine 1 furthermore comprises a generator 5 (electric machine). The generator 5 in turn comprises a rotor 12 connecting the generator 5 with the rotor hub 4. If the rotor hub 4 is connected directly to the generator 5, the wind turbine 1 is referred to as a gearless, direct-driven wind turbine. Such a generator 5 is referred as direct drive generator 5. As an alternative, the rotor hub 4 may also be connected to the generator 5 via a gear box (not shown). This type of wind turbine 1 is referred to as a geared wind turbine. The present invention is suitable for both types of wind turbines 1.

The generator 5 is located at the hub side part of the nacelle 3. The wind energy is transferred via the blades 6 into rotational energy of the rotor hub 4.

The generator 5 is arranged and prepared for converting rotational energy of the rotor hub 4 into electrical energy in the shape of an AC power.

As shown in the following figures, the generator 5 comprises a rotor 14 which is equipped with permanent magnets 10 and comprises a stator 17 having electrical steel equipped with stator coils/windings.

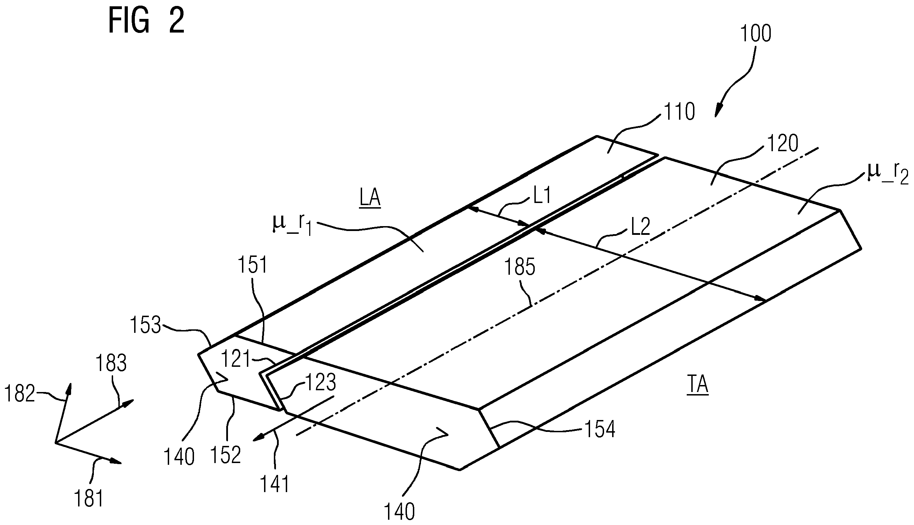

**Fig. 2** shows a covering element 100 according to an exemplary embodiment of the invention. The covering element 100 comprises a first sub-element 110 and a second sub-element 120 130. The first sub-element 110 and the second sub-element 120 are arranged adjacent to each other in a first direction 181 (circumferential). The second sub-element 120 is made from a different material than the first sub-element 110.

A second direction 182 (radial) extends perpendicular to the first direction 181 and a third direction 183 (axial) extends perpendicular to the first direction 181 (circumferential) and the second direction 182. A first cross-sectional surface 140 of the covering element 100 comprises a first normal 141 being parallel to the third direction 183. The first cross-sectional surface 140 comprises a first outer surface 151 which extends parallel to the first direction 181, a second outer surface 152 which extends parallel to the first direction 181 and is distanced from the first outer surface 151. Additionally, the first outer surface 151 and the second outer surface 152 are interconnected by a first coupling section 153 and a second coupling section 154, respectively. Further, the first coupling section 153 is distanced from the second coupling section 154.

As depicted in **Fig. 2,** the first coupling section 153 and the second coupling section 154 are each a protrusion in the shape of a V.

The first sub-element 110 comprises a first coupling surface 121 being an interface to the second sub-element 120 and distanced from the first coupling section 153 in the first direction 181 by a first distance L1, i.e. the first sub-element 110 has a first length L1 in a first direction (circumferential direction).

The second sub-element 120 comprises a second coupling surface 123 being an interface to the first sub-element 110. The third coupling surface 123 and the second coupling section 154 are distanced from each other in the first direction 181 by a second distance L2, i.e. the second sub-element 120 has a second length L2 in the first direction 181.

The first length L1 is smaller than the second length L2.

The length L1 of the first sub-element 110 in the first direction 181 is defined by the length of the cuboid which envelops the first sub-element 110.

The length L2 of the second sub-element 120 in the first direction 181 is defined by the length of the cuboid which envelops the second sub-element 120.

The first sub-element 110 has a first relative magnetic permeability $\mu\_r1$ which is higher than the second magnetic permeability $\mu\_r2$ of the second sub-element 120.

Additionally, the third coupling surface 123 is formed corresponding to the first coupling surface 121. Particularly, when the first coupling surface 121 is formed as a groove in the first sub-element 110, the third coupling surface 123 is formed as a corresponding protrusion in the second sub-element 120.

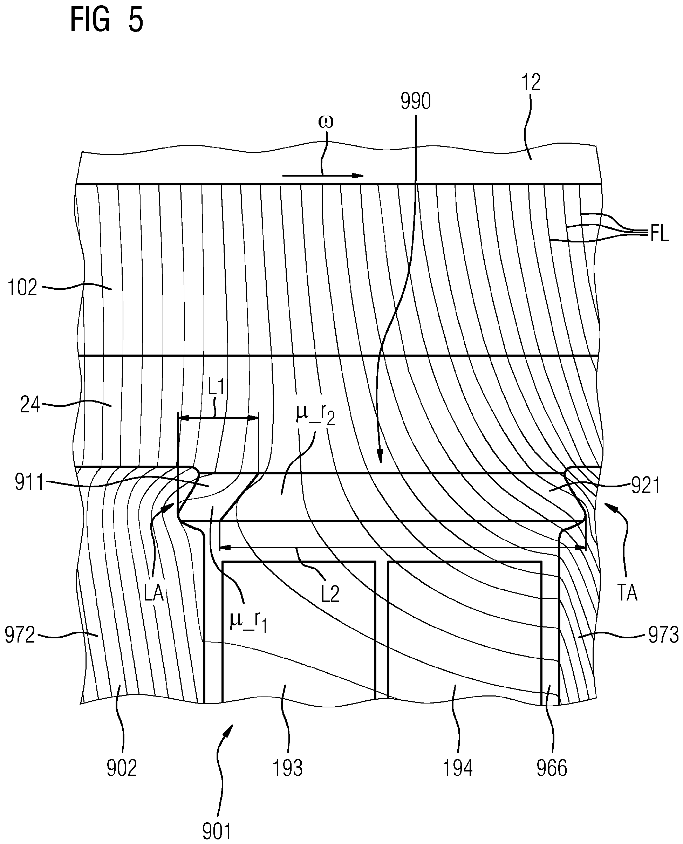

Left of the first sub-element 110, there is a leading area LA (Definition see in **Fig. 5**). Right of the second sub-element 120, there is a trailing area TA leading area (Definition see in **Fig. 5**).

As depicted in **Fig. 2,** the first coupling surface 121 is formed as a V-shaped groove in the first sub-element 110. Accordingly, the third coupling surface 123 is formed as corresponding V-shaped protrusion.

The first coupling surface 121 and the corresponding third coupling surface 123 may be formed as a groove or as a protrusion, for example in the shape of a V, a W, a semicircle, a semi-ellipse, a triangle, a semi-drop, a polygon, and/or a rectangle.

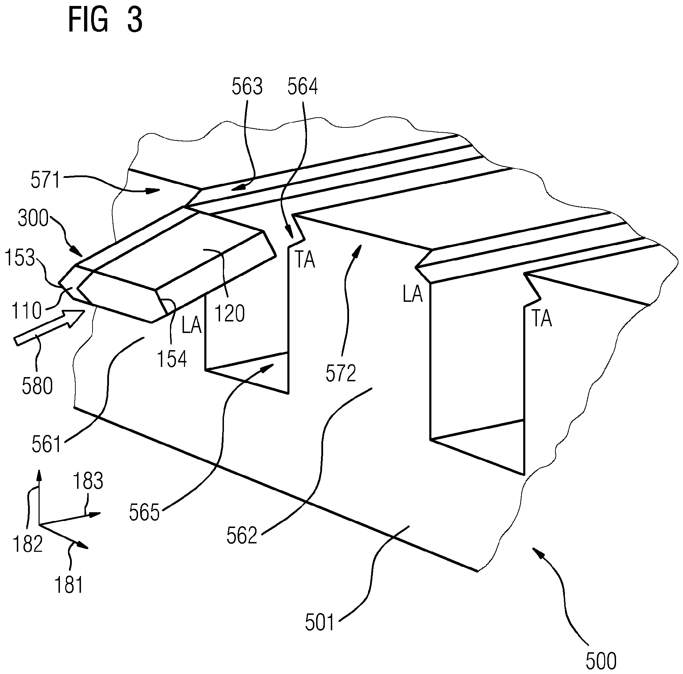

**Fig. 3** shows a stator 500 with a covering element 100 according to an exemplary embodiment of the invention.

The covering element 00 is formed according to the covering element 100 as shown and described in more detail in **Fig. 2**. The covering element 100 comprises a first sub-element 110 and a second sub-element 120 arranged one adjacent to the other in the first direction 181. The first sub-element 110 comprises the first coupling section 153 and the second sub-element 120 comprises the second coupling section 154.

The first direction 181 extends parallel to the circumferential direction of the stator 500. The second direction 182 extends parallel to the radial direction of the stator 500 and the third direction 183 extends parallel to the axial direction of the stator 500.

The stator comprises stator lamination sheet 501 being stacked in the third direction 183 (axial).

The stator 500 comprises a first tooth 561 and a second tooth 562 with a slot 565 in-between the first tooth 561 and the second tooth 562. The first tooth 561 comprises a first groove 563 in its tip region 571 and the second tooth 562 comprises a second groove 564 in its tip region 572. The first coupling section 153 is a protrusion with a V-shape and the first groove 563 has a complementary V-shape. Similarly, the second coupling section 154 is a protrusion with a V-shape and the second groove 564 has a complementary V-shape. The covering element 100 is inserted in the stator 500 by moving the covering element 100 in an inserting direction 580 being parallel to an axial direction of the stator and the third direction 183, respectively. When the covering element 100 is inserted into the slot 565, the slot 565 is closed in the radial direction and second direction 182, respectively. Hence, when a coil (not shown in **Fig. 3)** is inserted into the slot 565, the coil is securely held in place in the slot 565 by the covering element 100.

One or two or several covering elements 100 are inserted one after the other into the slot 565 until the sum of the lengths of the several covering elements 100 in the third direction 183 (axial direction) corresponds to the axial length of the stator 500 (not drawn to scale in **Fig. 3).**

Left of the first sub-element 110, there is a leading area LA (Definition see in **Fig. 5**). Right of the second sub-element 120, there is a trailing area TA leading area (Definition see in **Fig. 5**).

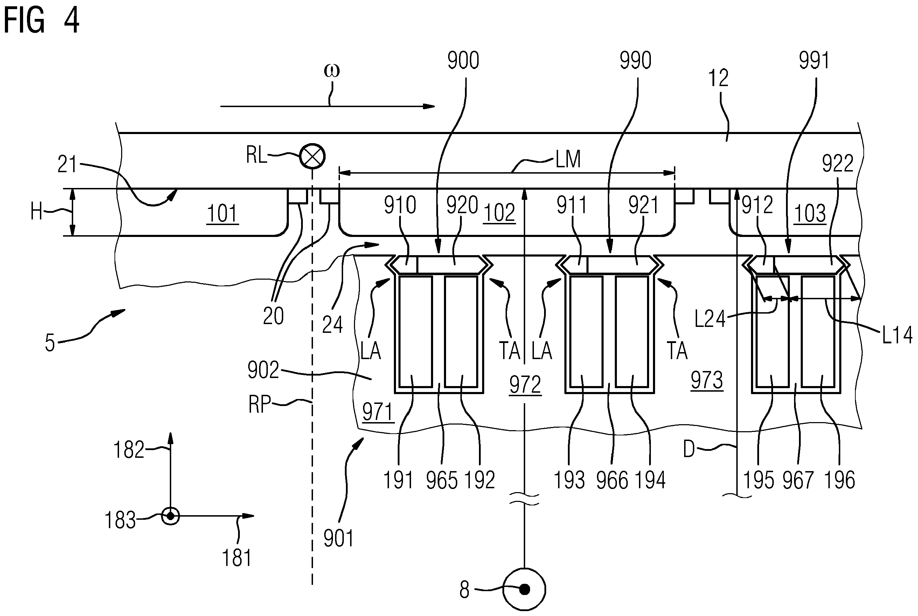

**Fig. 4** shows a cross section of a section of an electric machine 5 according to an exemplary embodiment of the invention. The electric machine 5 or more specific a generator 5 of a wind turbine 1 shown in **Fig. 1.** The rotor 12 of the generator 5 comprises a plurality of permanent magnets 101, 102, 103 which are mounted via mounting means 20 to a cylindric rotor body mounting surface 20 of the rotor 12. Alternatively, the magnets can be electrically excited (not shown). A diameter D of the rotor body mounting surface 20 can be at least 2000 mmm, preferably larger than 3000 mm. The permanent magnets 101, 102, 103 can have a height H larger than 10 mm, preferably between 15-30 mm. The circumferential length LM of a permanent magnet 101, 102, 103 is larger than 50 mm, preferably between 80 to 150 mm.

During operation of the wind turbine 1, the rotor 12 rotates in the rotational direction with a rotational speed $\omega$ about the rotational axis 8, in **Fig.4** shown in in clockwise direction.

As shown in **Fig. 4,** the permanent magnets 101, 102, 103 are opposed to a stator 901 which comprises stacked stator lamination sheets 902. The stator 901 is arranged radially inside of the rotor 12 with the air gap 24 therebetween. However, the present invention is also applicable in a modified embodiment, where the stator 901 is arranged radially outside of the rotor 12.

The stator 901 comprises a plurality of slots 965, 966, 967 circumferentially distributed over the circular cross section of the stator 900.

Two stator coils 191, 192; 193, 194; 195, 196 are arranged in each of the slots 965, 966, 967. Alternatively, one or more than two stator coils may be arranged in each of the slots 965, 966, 967. The slots 965, 966, 967 are also called stator slots. Each permanent magnet 101, 102, 103 extends over at least two slots 965, 966. Alternatively, each permanent magnet extends over less than two slots.

The coil winding topology is a concentrated winding configuration, in which a coil 192, 193 is arranged in two adjacent stator slots 965, 966 and wound around a stator tooth 972.

Alternatively, only one coil may be arranged in a stator slot being wound around a distance of several stator slots in a so called distributed winding configuration.

The stator 901, 902 comprises pair of teeth 971,972-972,973 with respective slots 965-966 in-between. The teeth 973,972,973 comprise respective grooves in its tip region engaging with the cover elements as shown in detail in **Fig. 3.**

In **Fig. 4,** covering elements 900, 990,991 comprise respective first sub-element 910,911, 912 and a second sub-element 920, 921, 922 which are arranged one adjacent to the other in the first direction 181.

The first direction 181 extends parallel to the circumferential direction of the stator 901. The second direction 182 extends parallel to the radial direction of the stator 901 and the third direction 183 extends parallel to the axial direction of the stator 901.

The leading area LA and trailing area TA of a stator slot 965, 966, 967 along the first direction 181 (circumferential direction) is defined in the following:

A reference line RL is located at the rotor 12 along a third direction 183 (axial direction).
A reference plane RP is extending from the reference line RL in a second direction 182 (in radial direction).

During operation of the electric machine 5, the rotor 12 and the reference plane RP rotate around the axis 8 (parallel to the third (axial) direction 183) of the rotor 12 with a rotational speed $\omega$.

Thus, the reference plane RP sweeps over and intersects with the stator 500, the stator teeth 971, 972, 973, the stator slots 965, 966, 96) and the covering elements 900, 990, 991 During rotation rotor 12 and the reference plane RP,

the region in which the reference plane RP starts to intersect with a stator slot 965, 966, 967 is defined as the leading area LA of the stator slot 565, 566, 567 and
the region in which the reference plane RP ends to intersect with the stator slot 965, 966, 967 is defined as a trailing area TA of the stator slot 965, 966, 967.

In **Fig. 4,** the leading area LA is located on the left side of a slot 965, 966, 967 and the trailing area TA is on the right side of a slot 965, 966, 96 as the rotor 12 rotates in clockwise direction with a rotational speed $\omega$.

The second sub-elements 920, 921, 922 are made of a material with different magnetic properties than the first sub-elements 910, 911, 912.

The first relative magnetic permeability $\mu\_r14$ of the first sub-element 910, 911, 912 is higher than the second magnetic permeability $\mu\_r24$ of the second sub-element 920, 921, 922. The first sub-elements 910, 911, 912 have a respective first length L14 in the first direction 181 and the second sub-elements 920, 921, 922 have a second length L24 in the first direction 181, wherein the respective first lengths L14 are smaller than the respective second length L24.

The first sub-elements 910, 911, 912 of the covering elements 900, 990, 991 are located at or close to the leading area LA of the respective stator slots 965, 966, 967.

The second sub-elements 920, 921, 922 of the covering elements 900, 990, 991 are located at or close to the trailing area TA of the respective stator slots 965, 966, 967.

During rotation of the rotor 12, the magnetic flux created by the magnets 101, 102, 103 and by the currents in the coils/windings 11, 192, 193, 194, 195,196 has an asymmetric distribution of magnetic flux between the leading areas LA and the trailing areas TA of the stator slots 965, 966, 967. Without considering the influence of the cover elements 900, 990, 991, the magnetic flux (or the density of the magnetic flux lines) is higher at the trailing area TA than the magnetic flux at the leading area LA. (see details in **Fig. 5**)

**Fig. 5** shows an enlarged section of a part of the electric machine of **Fig. 4.** The rotor 12 with the shown magnet 102 rotates in the direction of the rotational speed $\omega$. The magnet 102 sweeps (in **Figs. 4 and 5** from left to right) over the stator tooth 972 located at the leading area LA of the stator slot 966, the coils 193, 194 and the stator slot 973 located at the trailing area TA of the stator slot 966 creating a magnetic flux which size is represented by the density of the flux lines FL. The flux lines FL are more dense at the trailing area TA of the cover element 990 and the stator tooth 973 compared to the leading area LA of the cover element 990 and the stator tooth 972 wherein more dense flux lines FL mean a higher magnetic flux.

By designing the first sub-element 911 with a smaller first length L1 in circumferential direction, but a higher relative permeability $\mu\_r1$ compared to the second sub-element 921 having a second length L2 and a relative permeability $\mu\_r2$, a better flux linkage with resulting increased torque can be achieved without creating a significant increase of magnetic forces on the cover element 990.

In this embodiment of **Fig. 5,** the relative permeability $\mu\_r1$ of the first sub-element 911 is about 10 and the first length L1 is about 4mm. The relative permeability $\mu\_r2$ of the second sub-element 921 is about 1, i.e. non-magnetic and the second length L1 is about 15mm. This means:

$$\mu\_r1/\mu\_r2 = 10$$

$$L1/L2 = 0,27$$

Compared to a non-magnetic cover element with $\mu\_r=1$, the torque of the generator 5 with the cover element 990 of Fig. 5 is increased by almost 0,6% without compromising the reliability of the generator 5 related to due not significantly increased magnetic forces acting on the cover element 990.

The first sub-element 911 comprises a coupling surface 912 being an interface to the second sub-element 921.

The second sub-element 921 comprises a coupling surface 922 being an interface to the first sub-element 911. The corresponding coupling surfaces 912, 922 are inclined with its tip being located on the magnet side of the cover element 990.

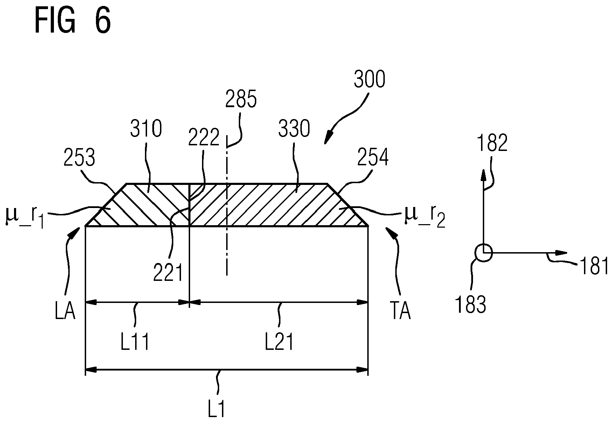

**Fig. 6** shows a cross section of a covering element 300 according to an exemplary embodiment of the invention. Compared to the covering element 100 shown in **Fig. 1,** the outer shape of the covering element 300 is slightly different.

The cross-section with the plane of the first and second directions 181,182 has a first normal being parallel to the third direction 183.

A first sub-element 310 and a second sub-element 330 are arranged one adjacent to another in the first direction 181. The second sub-element 330 is arranged at the leading area LA of the respective stator slot, see details in **Figs. 4 and 5.** The first sub-element 310 is arranged in the trailing area TA of the respective stator slot see details in **Figs. 4 and 5.** A first length L11 is the length of the first sub-element 310 in the first direction 181. A second length L21 is the length of the second sub-element 330 and in the first direction 181. The first length L11 is smaller than the second length L21. The length L11 of the first sub-element 310 in the first direction 181 is defined by the length of the cuboid which envelops the first sub-element 310.

The length L2 of the second sub-element 120 in the first direction 181 is defined by the length of the cuboid which envelops the second sub-element 330.

The first sub-element 310 has a first relative magnetic permeability $\mu\_r1$ which is higher than the second magnetic permeability $\mu\_r2$ of the second sub-element 330.

The first sub-element 310 comprises a first coupling section 253 in the shape of a triangle. The second sub-element 330 comprises a second coupling section 254 which is formed as a triangle as well.

The first coupling section 253 and the second coupling section 254 are axis-symmetric to the middle axis 285. Alternatively (not shown), the triangles shaped coupling sections 253, 254 may also have a notch shape which is often used for stator covering elements.

A first coupling surface 221 and a second coupling surface 222 are each formed straight, i.e. parallel to the second direction 182 (radial). Hence, the first coupling surface 221 and the first coupling section 253 are of different shape. Furthermore, the second coupling surface 222 and the second coupling section 254 are also of different shape.

A first length L11 of the first sub-element 310 is smaller than a second length L12 of the second sub-element 320. The covering element 300 is formed such that the second sub-element 330 is arranged eccentric from the middle 285 of the covering element 300 in the first direction 181. The second sub-element 330 is arranged on the right side of the cross-section 285 at the trailing Area TA.

The cover element 300 has preferably a length L in first direction 181 between 15 and 30mm, preferably between 20 and 25mm.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Covering element (100, 300, 900, 990, 991) for covering a stator slot (565, 965, 966, 967) between two adjacent stator teeth (561, 562, 971, 972, 973) of the stator (500, 501) of an electric machine (5), the covering element (100, 300, 900, 990, 991) comprising

   a first sub-element (110, 310, 910, 911, 912) and a second sub-element (120, 330, 920, 921, 922),

   wherein the first sub-element (110, 310, 910, 911, 912) and the second sub-element (120, 330, 920, 921, 922) are arranged adjacent to each other in a first direction (181),
   wherein the second sub-element (120, 330, 920, 921, 922) is made of a material with different magnetic properties than the first sub-element (110, 310, 910, 911, 912),
   wherein the first relative magnetic permeability ($\mu\_r1$) of the first sub-element (110, 310, 910, 911, 912) is higher than the second magnetic permeability ($\mu\_r2$) of the second sub-element (120, 330, 920, 921, 922).
   wherein the first sub-element (110, 310, 910, 911, 912) has a first length (L1) in a first direction (181) and the second sub-element (120, 330, 920, 921, 922) has a second length (L2) in the first direction (181), wherein the first length (L1) is shorter than the second length (L2),
   wherein the first sub-element (110, 310, 910, 911, 912) of the at least one covering element (100, 300, 900, 990, 991) is located at the leading area (LA) of the respective stator slot (565, 965, 966, 967),

wherein the second sub-element (120, 330, 920, 921, 922) of the at least one covering element (100, 300, 900, 990, 991) is located at the trailing area (LA) of the respective stator slot (565, 965, 966, 967),

wherein the leading area (LA) and trailing area (TA) of a stator slot (565, 965, 966, 967) along the first direction (181) is defined in the following:

a reference line (RL) is located at the rotor (12) along a third direction (183, in axial direction),

a reference plane (RP) is extending from the reference line (RL) in a second direction (182, radial direction),

during operation of the electric machine (5)

the rotor (12) and the reference plane (RP) rotate around the axis (8) of the rotor (12) with a rotational speed (w) the reference plane (RP) sweeping over and intersecting with the stator (500), the stator teeth, the stator slots (565) and the covering elements (100, 300, 900, 990, 991)

- during rotation of the reference plane (RP)

the region in which the reference plane (RP) starts to intersect with a stator slot (565, 965, 966, 967) is defined as the leading area (LA) of the stator slot (565, 965, 966, 967) and

the region in which the reference plane (RP) ends to intersect with the stator slot (565, 965, 966, 967) is defined as a trailing area (TA) of the stator slot (565, 965, 966, 967).

2. Covering element according to claim 1,

wherein the first sub-element (110, 310, 910, 911, 912) has a relative first permeability ($\mu\_r1$) between 3 and 20, preferably between 5 and 15, preferably between 8 and 12, preferably of about 10 with preferably non-linear soft magnetic properties,

wherein the second sub-element (120, 330, 920, 921, 922) has a second relative permeability ($\mu\_r2$) of less than 3 (three), preferably less than 2, preferably of about 1,

wherein the relation of the first permeability to the second permeability is between 3 and 15 ($3<\mu\_r1/\mu\_r2<15$), preferably between 6 and 12 ($6<\mu\_r1/\mu\_r2<12$), preferably between 9 and 11 ($9<\mu\_r1/\mu\_r2<11$).

3. Covering element according to one of claims 1 and 2,

wherein the first sub-element (110, 310, 910, 911, 912) is magnetically saturated during operation of the electric machine (5),
and/or
wherein the second sub-element (120, 330, 920, 921, 922) is magnetically non-saturated during operation of the electric machine (5),
preferably the respective magnetic field in the first sub-element (110, 310, 910, 911, 912) and/or the second sub-element (120, 330, 920, 921, 922) being below 1,5 to 1,8 Tesla.

4. Covering element according to one of the previous claims,
wherein the relation between first length (L1) and second length (L2) is between 1/7 and 1/3, preferably between 1/6 and 1/4, preferably between 1/5 and 1/4.

5. Covering element according to one of the previous claims,
wherein the cover element (100, 300, 900, 990, 991) has a length in first direction (181) between 15 and 50mm, preferably between 20 and 25mm.

6. Covering element according to one of the previous claims,
wherein the covering element (100, 300, 900, 990, 991) comprises essentially only the first sub-element (110, 310, 910, 911, 912) and the second sub-element (120, 330, 920, 921, 922) and no other sub-element in the first direction (181) .

7. Covering element according to one of the previous claims,

wherein the first sub-element (110, 310, 910, 911, 912) and the second sub-element (120, 330, 920, 921, 922) are formed as an integral part of the covering element (100, 300, 900, 990, 991) by pressing and/or heat treatment of a powder with different magnetic properties or with a powder with the same magnetic properties but with a different density distribution, wherein preferably the first sub-element element and the second sub-element are made of a fibre composite, e.g. glass fibre and epoxy resin, wherein the first element is loaded with magnetic powder and the second sub-element is with less or without magnetic powder, or
wherein the second sub-element (120, 330, 920, 921, 922) is made of a different material than the first sub-element (110, 310, 910, 911, 912) preferably being fixed to each other via gluing or welding or casting or moulding or chemical linkage.

8. Covering element according to one of the previous claims,

   wherein the first direction (181) extends parallel to the circumferential direction of the electric machine (5) or the stator (500),
   wherein the second direction (182) extends parallel to the radial direction of the electric machine (5) or the stator (500),
   wherein the third direction (183) extends parallel to the axial direction of the electric machine (5) or the stator (500) .

9. Covering element according to one of the previous claims,
   wherein the stator (500) comprises stator lamination sheets (501) stacked on each other in the third direction (183, axial direction).

10. Covering element according to one of the previous claims,
    wherein the first sub-element (110, 310, 910, 911, 912) and the second sub-element (120, 330, 920, 921, 922) are configured for being each coupled to a tip region (571, 572) of a stator tooth (561, 562, 971, 972, 973), preferably via press fitting and/or epoxy resin.

11. Stator (500, 501) for an electric machine (5), preferably a generator (5) of a wind turbine (1), the stator (500, 501) comprising

    at least a pair of two stator teeth (561, 562, 971, 972, 973), and
    at least one covering element (100, 300, 900, 990, 991) according to any one of the previous claims,
    wherein each of the pair of stator teeth (561, 562, 971, 972, 973) comprises a tip region with a groove (563, 564), wherein the at least one covering element (100, 300, 900, 990, 991) is arranged in-between the two stator teeth (561, 562, 971, 972, 973),
    wherein the first sub-element (110, 310, 910, 911, 912) comprises a first coupling section (153),
    wherein the second sub-element (120, 330, 920, 921, 922) comprises a second coupling section (154),
    wherein the first coupling section (153) and the second coupling section (154) are each coupled in the respective groove (563, 564) of the two teeth (561, 562, 971, 972, 973)).

12. Stator (500) according to claim 11,
    wherein the respective groove (563, 564) has a shape being complementary to a shape of a first coupling section (153) or a second coupling section (154).

13. Method of forming a covering element (100, 300, 900, 990, 991) according to one of the previous claims 1 to 10, providing a first sub-element (110, 310, 910, 911, 912), and providing a second sub-element (120, 330, 920, 921, 922), arranging the first sub-element (110, 310, 910, 911, 912) and the second sub-element (120, 330, 920, 921, 922) adjacent to each other in the first direction (181),

    fixing the first sub-element (110, 310, 910, 911, 912) and the second sub-element (120) to each other via gluing or welding or casting or moulding or chemical linkage,
    wherein the second sub-element (120, 330, 920, 921, 922) is made of a different material than the first sub-element (110, 310, 910, 911, 912),
    wherein preferably the second sub-element (120, 330, 920, 921, 922) is made of a fiber composite or fiber glass laminate.

14. Method of forming a covering element (100, 300, 900, 990, 991) according to one of the previous claims 1 to 10, providing a first sub-element (110, 310, 910, 911, 912), and providing a second sub-element (120, 330, 920, 921, 922), arranging the first sub-element (110, 310, 910, 911, 912) and the second sub-element (120) adjacent to each other in the first direction (181),
    wherein the first sub-element (110, 310, 910, 911, 912) and the second sub-element (120, 330, 920, 921, 922) are made as one integral part, wherein preferably the first sub-element element and the second sub-element are made of a fibre composite, e.g. glass fibre and epoxy resin , wherein the first element is loaded with magnetic powder and the second sub-element comprises with less magnetic powder or no magnetic powder.

FIG 1

FIG 2

EP 4 636 996 A1

# FIG 3

FIG 4

EP 4 636 996 A1

# FIG 5

FIG 6

Europäisches
Patentamt

European
Patent Office

Office européen
des brevets

# EUROPEAN SEARCH REPORT

**Application Number**

EP 24 17 1226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 473 745 C (AEG) 20 March 1929 (1929-03-20) * column 1, lines 31-37; claim 1; figure 3 * | 1-13 | INV. H02K3/493 ADD. H02K7/18 |
| X | SU 417 873 A1 (.) 28 February 1974 (1974-02-28) * figure 2 * | 1-12 | |
| X | JP S50 77704 U (HITACHI LTD) 5 July 1975 (1975-07-05) * figures 1, 3 * | 1-12 | |
| X | EP 3 457 536 A1 (SIEMENS GAMESA RENEWABLE ENERGY AS [DK]) 20 March 2019 (2019-03-20) * paragraphs [0012], [0015], [0030], [0031], [0034]; claims 1, 4; figures 1, 5, 6, 7 * | 1-12,14 | |
| A | JP S52 97106 A (HITACHI LTD) 15 August 1977 (1977-08-15) * the whole document * | 1-14 | TECHNICAL FIELDS SEARCHED (IPC) H02K |

The present search report has been drawn up for all claims

| Place of search | Date of completion of the search | Examiner |
|---|---|---|
| The Hague | 1 October 2024 | Van de Maele, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1226

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | | Publication date | Patent family member(s) | | Publication date |
|---|---|---|---|---|---|
| DE 473745 | C | 20-03-1929 | NONE | | |
| SU 417873 | A1 | 28-02-1974 | NONE | | |
| JP S5077704 | U | 05-07-1975 | NONE | | |
| EP 3457536 | A1 | 20-03-2019 | EP | 3457536 A1 | 20-03-2019 |
| | | | US | 2019081525 A1 | 14-03-2019 |
| | | | US | 2021057953 A1 | 25-02-2021 |
| JP S5297106 | A | 15-08-1977 | JP | S53807 B2 | 12-01-1978 |
| | | | JP | S5297106 A | 15-08-1977 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3457536 B1